# EUROPEAN PATENT APPLICATION

(11) **EP 4 057 476 A2**
(43) Date of publication of application: **14.09.2022**
(21) Application number: 22157785.1
(22) Date of filing: 21.02.2022
(51) Int. Cl.: H02J 7/00, H02J 3/28, H02J 3/38, H02J 15/00

(54) **SYSTEM FOR PRODUCING HYDROGEN FROM RENEWABLE ENERGY AND CONTROL METHOD THEREOF**

(30) Priority: 23.02.2021 CN 202110202867
(71) Applicant: Sungrow Power Supply Co., Ltd., Hefei, Anhui 230088 (CN)
(72) Inventor: ZHANG, Xinjian, Hefei, 230088 (CN)
(74) Representative: Epping - Hermann - Fischer

(57) **Abstract**

The present disclosure relates to a system for producing hydrogen from renewable energy and a control method thereof. The system includes a renewable-energy-based power generation system, a primary hydrogen production system, a secondary hydrogen production system, and a controller. An output end of the renewable-energy-based power generation system is connected to the primary hydrogen production system and the secondary hydrogen production system via an electrical conversion device. A capacity of the primary hydrogen production system is greater than or equal to a capacity of the secondary hydrogen production system. The controller is configured to monitor an output electrical performance parameter of the renewable-energy-based power generation system in real time, and control start and stop of the primary hydrogen production system and the secondary hydrogen production system.

## Description

### FIELD

The present disclosure relates to the technical field of hydrogen production system, and in particular, to a system for producing hydrogen from renewable energy and a method for controlling the system.

### BACKGROUND

In recent years, renewable energy such as photovoltaic power and wind power is developed rapidly. Installed capacity of photovoltaic power and wind power is increased and thereby causes a further increase of power fluctuation. When power of renewable energy fluctuates, it is required to dispatch conventional power generation equipment for compensation. However, the installed capacity of conventional power generation equipment may fail to cope with such huge power fluctuation, which makes it difficult for the renewable energy to be accommodated. In addition, there are challenges for a power access grid for the renewable energy as follows. 1) Power quality of renewable energy affects a security of the power grid. 2) There are different access schemes at different regions, making a standardized design difficult. 3) Renovation of original electricity distribution station is required, which takes a long construction period. 4) Power companies in different regions have different design requirements.

In a new energy system, hydrogen is an ideal secondary energy. Hydrogen has high calorific value and high energy density compared with other energy sources, and a product from hydrogen is water. Therefore, hydrogen is a most environmentally friendly energy source and is widely considered as an energy carrier possibly replacing traditional fossil fuels. At present, a scale of hydrogen production by water electrolysis accounts for only about 3% of an overall scale of the hydrogen production industry. A main reason is a high cost of the hydrogen production by water electrolysis. The cost is greatly affected by electricity price, which accounts for more than 70% of a total cost. However, with grid parity of renewable-energy-based power generation, cost of the hydrogen production from renewable energy is continuously reducing, and the hydrogen production from renewable-energy-based power generation has a great potential in the future. Therefore, photovoltaic power and wind power with strong fluctuation characteristics may be converted into hydrogen energy, which is more convenient for storage and transportation.

At present, the scheme for hydrogen production from renewable energy that has been implemented or is being implemented relates to mutual decoupling of renewable-energy-based power generation and water electrolysis hydrogen production, that is, a renewable-energy-based power plant and a water electrolysis hydrogen production station are separate from each other, the power is transported from the renewable-energy-based power plant to the water electrolysis hydrogen production station via cables. Such scheme on the one hand requires connection to a power grid, and on the other hand, has a low efficiency due to a processing of transforming, boosting, steeping down, and transforming of power, which is not conducive to reduction in the cost of hydrogen production from renewable energy. In addition, the current system for hydrogen production from renewable energy uses an energy storage unit as an intermediate buffer unit to convert a fluctuating renewable-energy-based power generation into a smooth power supply to the water electrolysis hydrogen production system. However, the water electrolysis hydrogen production system has a relatively high power, which requires a large-capacity energy storage unit, and thereby has a high cost and a poor engineering practicability.

Conventional technologies disclose a technical solution related to mutual coupling of a hydrogen production system and a renewable-energy-based power generation system, which improves efficiency of hydrogen production and reduces cost for hydrogen production. However, on the one hand, the hydrogen production system is required to have a certain operating parameter to effectively produce hydrogen; and on the other hand, an output electrical performance parameter of the renewable-energy-based power generation system have obvious fluctuation, intermittence and unpredictability, which cause serious loss of the renewable-energy-based power generation system in each day.

Based on the above, there is an urgent need to develop a system for producing hydrogen from renewable energy and a method for controlling the system, to perform regulation on renewable-energy-based power generation and a hydrogen production system, so that a power utilization range of renewable energy and a utilization rate of the hydrogen production system are improved, a power generated from renewable energy is used for hydrogen production to a maximum extend, and a cost of hydrogen production from renewable energy is reduced.

### SUMMARY

In view of the problems in the conventional technology, a system for producing hydrogen from renewable energy and a method for controlling the system are provided in the present disclosure. The system for producing hydrogen from renewable energy includes a renewable-energy-based power generation system, a primary hydrogen production system, a secondary hydrogen production system, and a controller. An output end of the renewable-energy-based power generation system is connected to the primary hydrogen production system and the secondary hydrogen production system via an electrical conversion device. A capacity of the primary hydrogen production system is greater than or equal to a capacity of the secondary hydrogen production system. The controller is configured to monitor an output electrical performance parameter of the renewable-energy-based power generation system in real time, and control turn on and turn off of the primary hydrogen production system and the secondary hydrogen production system. In this way, a power utilization range of renewable energy is improved, a power generated from renewable energy is used for hydrogen production to a maximum extend, a cost of hydrogen production from renewable energy is reduced, and an engineering practicability is improved.

To achieve the objectives, technical solutions below are provided in the present disclosure.

An objective of the present disclosure is to provide a system for producing hydrogen from renewable energy. The system includes a renewable-energy-based power generation system, a primary hydrogen production system, a secondary hydrogen production system, and a controller. An output end of the renewable-energy-based power generation system is connected to the primary hydrogen production system and the secondary hydrogen production system via an electrical conversion device. A monitoring end of the controller is connected to the output end of the renewable-energy-based power generation system, and a control end of the controller is connected to the electrical conversion device. A capacity of the primary hydrogen production system is greater than or equal to a capacity of the secondary hydrogen production system.

In the system for producing hydrogen from renewable energy, the controller is configured to monitor an output electrical performance parameter of the renewable-energy-based power generation system in real time, and control turn on and turn off of the primary hydrogen production system and the secondary hydrogen production system, so as to perform regulation on the renewable-energy-based power generation system and the hydrogen production system. In this way, a power utilization range of renewable energy and a utilization rate of the hydrogen production system are improved, a power generated from renewable energy is used for hydrogen production to a maximum extend, a cost of hydrogen production from renewable energy is reduced, and an engineering practicability is improved.

In an embodiment, the electrical conversion device includes a primary electrical converter and a secondary electrical converter. The output end of the renewable-energy-based power generation system is connected to a direct current, DC, bus. The DC bus is connected to a power supply end of the primary hydrogen production system via the primary electrical converter. The DC bus is connected to a power supply end of the secondary hydrogen production system via the secondary electrical converter. The control end of the controller is connected to the primary electrical converter and the secondary electrical converter.

In an embodiment, the renewable-energy-based power generation system includes a photovoltaic array or a wind power generator, the primary hydrogen production system includes one primary electrolytic cell for hydrogen production, and the secondary hydrogen production system includes one or more secondary electrolytic cells for hydrogen production.

It should be noted that an AC/DC electrical converter is arranged between the wind power generator and the DC bus. An AC input end of the AC/DC electrical converter is connected to an output end of the wind power generator, and a DC output end of the AC/DC electrical converter is connected to the DC bus. The AC/DC electrical converter is configured to convert an AC power generated by the wind power generator into a DC power to be directed into the DC bus.

It should be noted that in a case where the secondary hydrogen production system includes at least two secondary electrolytic cells for hydrogen production, a rated parameter of the secondary electrolytic cell for hydrogen production mentioned below refers to a sum of rated parameters of all the secondary electrolytic cells for hydrogen production; and an operating parameter of the secondary electrolytic cell for hydrogen production refers to a minimum operating parameter among operating parameters of all the secondary electrolytic cells for hydrogen production.

In an embodiment, the primary electrolytic cell for hydrogen production and the secondary electrolytic cell for hydrogen production are both alkaline electrolytic cells.

It should be noted that, the primary electrolytic cell for hydrogen production is implemented as a large-capacity alkaline electrolytic cell in order to reduce cost for hydrogen production, as it is a feature for an electrolytic cell that a larger capacity of a single cell causes a lower cost. The secondary electrolytic cell for hydrogen production has a small capacity of a single cell in order to facilitate peak regulation, and is preferably implemented as an alkaline electrolytic cell to reduce cost. The secondary electrolytic cell has a smaller capacity than the primary electrolytic cell, and the secondary electrolytic cell and the primary electrolytic cell complement each other.

In this way, the power generated from renewable energy is utilized to a maximum extent when the power is insufficient or exceeds an upper limit of a rated parameter of the primary electrolytic cell, thereby reducing the cost of hydrogen production from renewable energy.

In an embodiment, the system for producing hydrogen from renewable energy further includes an energy storage unit or grid. The energy storage unit or grid is connected to the DC bus via a bi-directional electrical converter included in the electrical conversion device. The control end of the controller is connected to the bi-directional electrical converter. In an embodiment, the energy storage unit is a battery.

It should be noted that since a cost of the energy storage unit is relatively high, the energy storage unit may be configured having a capacity corresponding to a minimum energy required to ensure a hot standby condition of the hydrogen production system. In addition, there may be no energy storage unit in a case where the hydrogen production system can access to an external grid, and power from the grid may be used to power an AC powered device in the hydrogen production system, and a small amount of generated power that cannot be used for hydrogen production may be integrated into the grid and utilized. Since there is a small amount of power in the hydrogen production system that cannot be used for hydrogen production, the amount of power to be integrated into the grid is minimized, and the impact or dependence on the grid is minimized.

In an embodiment, the system for producing hydrogen from renewable energy further includes an AC powered device. The AC powered device is connected to the DC bus via an electrical inverter included in the electrical conversion device. The control terminal of the controller is connected to the electrical inverter.

It should be noted that the AC powered device in the hydrogen production system needs to be turned on all the time to maintain an appropriate temperature required by the hydrogen production system and provide electricity required for a normal operation of the hydrogen production system.

In an embodiment, the system for producing hydrogen from renewable energy further includes a hydrogen separation and purification system shared by the primary hydrogen production system and the secondary hydrogen production system.

It should be noted that the hydrogen separation and purification system is shared by the primary hydrogen production system and the secondary hydrogen production system, and is placed in open air in a skid-mounted manner, which can greatly reduce the cost of hydrogen production; moreover, the hydrogen separation and purification system is configured to emit or collect produced oxygen in situ, and collect produced hydrogen.

In the system for producing hydrogen from renewable energy according to the present disclosure, the electrical conversion device includes a primary electrical converter, a secondary electrical converter, a bi-directional electrical converter, and an electrical inverter, which may be collectively referred to as an energy management system. The energy management system is configured to: convert, to a maximum extent, a renewable-energy-generated power into a DC power; transmit the DC power to the DC bus via a DC cable; convert, through the primary electrical converter and the secondary electrical converter, the DC power into a DC power available for the primary hydrogen production system and the secondary hydrogen production system; charge and discharge the energy storage unit or grid through the bi-directional electrical converter; and converter, through the electrical inverter, the DC power into an AC power available for an AC powered device in the hydrogen production system.

Another objective of the present disclosure is to provide a method for controlling the system for producing hydrogen from renewable energy. The method includes: acquiring an operating parameter of the secondary hydrogen production system as a first threshold; acquiring an operating parameter of the primary hydrogen production system as a second threshold; monitoring, by the controller, an output electrical performance parameter of the renewable-energy-based power generation system in real time; controlling the secondary hydrogen production system to be turned on or turned off based on whether the output electrical performance parameter being greater than the first threshold; and controlling the primary hydrogen production system to be turned on or turned off based on whether the output electrical performance parameter being greater than the second threshold. The first threshold value is less than the second threshold value.

In the system for producing hydrogen from renewable energy, the controller monitors an output electrical performance parameter of the renewable-energy-based power generation system in real time, controls turn on and turn off of the primary hydrogen production system and the secondary hydrogen production system, to regulate the renewable-energy-based power generation system and the hydrogen production system. In this way, a power utilization range of renewable energy and a utilization rate of the hydrogen production system are improved, a power generated from renewable energy is used for hydrogen production to a maximum extend, a cost of hydrogen production from renewable energy is reduced, and an engineering practicability is improved.

It should be noted that the control of turn on and turn off of the primary hydrogen production system and the secondary hydrogen production system may be implemented by separately controlling on/off of the primary electrical converter and the secondary electrical converter, or by directly controlling on/off switches of the hydrogen production devices corresponding to the primary hydrogen production system and the secondary hydrogen production system, as long as whether to start hydrogen production in the primary hydrogen production system and the secondary hydrogen production system is under control.

In an embodiment, the method further includes: controlling the secondary hydrogen production system to be turned off and maintaining the primary hydrogen production system to be turned on, in a case where the output electrical performance parameter is greater than the second threshold and is less than a sum of the first threshold and the second threshold.

In an embodiment, the method further includes: controlling the secondary hydrogen production system to be turned off and maintaining the primary hydrogen production system to be turned on, or controlling the secondary hydrogen production system and the primary hydrogen production system both to be turned on, in a case where the output electrical performance parameter is greater than a sum of the first threshold and the second threshold, and is less than a rated parameter for the primary hydrogen production system.

It should be noted that although the power generated from the renewable-energy-based power generation system in this case may be used for hydrogen production solely by the primary hydrogen production system or simultaneously by the primary hydrogen production system and the secondary hydrogen production system, it is preferable to produce hydrogen through both the primary hydrogen production system and the secondary hydrogen production system, so as to save energy and therefore reduce the cost.

In an embodiment, the method further includes: acquiring a sum of a rated parameter of the secondary hydrogen production system and a rated parameter of the primary hydrogen production system, as a third threshold; and controlling the energy storage unit or grid to be turned on and charged based on whether the output electrical performance parameter being greater than the third threshold.

In an embodiment, the method further includes: controlling the energy storage unit or grid to be turned on and charged based on whether the output electrical performance parameter being less than the first threshold.

It should be noted that in terms of capacity configuration of the energy storage unit, because of the high cost of the energy storage unit at present, the energy storage unit configured with a high capacity is unfavorable in reducing the cost of hydrogen production. Therefore, it is preferable to configure a low capacity for the energy storage unit. However, in order to ensure a safe and efficient operation of the hydrogen production system, it is necessary to ensure that the hydrogen production system is always in the hot standby condition, that is, a temperature of the hydrogen production system is always kept within an operating temperature range, and therefore a minimum configuration of the energy storage unit should enable the hot standby condition.

In addition, with the method for controlling the system for producing hydrogen from renewable energy according to the present disclosure, the controller monitors an output electrical performance parameter of the renewable-energy-based power generation system in real time, controls turn on and turn off of the primary hydrogen production system and the secondary hydrogen production system, the power generated from renewable energy is used for hydrogen production to a maximum extent, and a small amount of generated power that cannot be used for hydrogen production is stored in the energy storage unit. Based on statistics, under a reasonable configuration, an amount of the power generated from renewable energy stored by the energy storage unit is basically equal to the power required to keep the hydrogen production system always in the hot standby condition, and the capacity of the energy storage unit is not too large. Therefore, the technical solution of the present disclosure theoretically can achieve a 100% utilization of renewable energy.

In an embodiment, the method further includes: controlling the energy storage unit or grid to be turned on and charged based on whether the output electrical performance parameter being greater than an operating parameter for a hot standby condition.

In an embodiment, the method further includes: controlling the energy storage unit or grid to be turned on and discharge based on whether the output electrical performance parameter being less than an operating parameter for a hot standby condition. The operating parameter for the hot standby condition is less than the first threshold.

It should be noted that based on the case that a demanded power for the hot standby condition is satisfied, an excess part of the power generated from renewable energy is used for charging the energy storage unit. Although in a case where the output electrical performance parameter is greater than the first threshold, the energy storage unit is controlled to be turned off and the power generated from renewable energy is preferentially used for hydrogen production, a charging/discharging strategy of the energy storage unit may be adjusted flexibly in practice based on a state of charge (SOC) of the energy storage unit. For example, the energy storage unit may be charged during the time period when the output electrical performance parameter is greater than the operating parameter for the hot standby condition, so as to ensure a safe and efficient operation of the energy storage unit.

In an embodiment, a power generation capacity of the renewable-energy-based generation system is in a range of one to two times of the rated parameter of the primary hydrogen production system. For example, the power generation capacity of the renewable-energy-based generation system is 1 time, 1.2 times, 1.3 times, 1.4 times, 1.5 times, 1.8 times or 2 times of, preferably in a range of 1.2 times to 1.5 times of, the rated parameter of the primary hydrogen production system. The listed numerals are not limiting, and any other numeral within the range is also applicable.

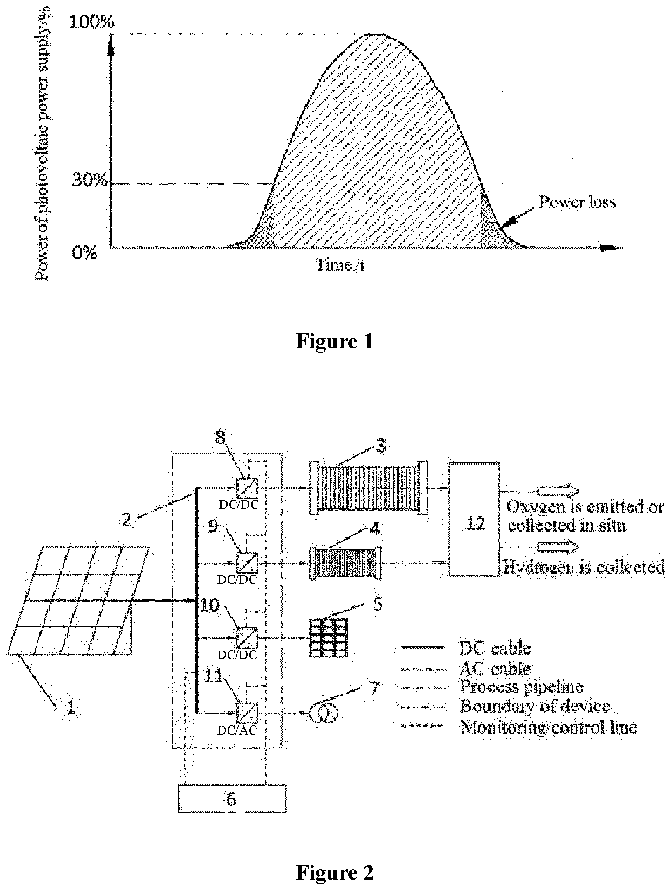

It should be noted that, in the present disclosure, the power generation capacity of the renewable-energy-based generation system refers to, in consideration of the loss, the power at a front of a hydrogen production power supply, that is, a maximum power corresponding to the DC bus. A preferred over-configuration scheme is that the power generation capacity of a renewable-energy-based power generation system is configured to be greater than the rated parameter of the primary hydrogen production system, which may improve the utilization rate of the primary hydrogen production system and reduce the cost of hydrogen production. Figure 1 shows a power curve of a photovoltaic array on one day with best power generation throughout a year. In a case where a peak (a maximum power corresponding to the DC bus) is set equal to the rated parameter of the primary hydrogen production system, that is, the equalized configuration scheme is applied, on one hand since an alkaline electrolytic cell cannot be activated if 30% of rated parameter is not achieved (the 30% is set by a manufacturer, and may be set to be in a range of 40% to 50% by another manufacturer), that is, a power loss is caused in this part of photovoltaic power, and on the other hand, a photovoltaic power curve for most of the 365 days in the year is in fact far from the curve shown in Figure 1 due to intermittency and unpredictability of photovoltaic power generation. Although the power loss due to being below 30% of rated parameter shown in Figure 1 only accounts for about 5.5% of a total photovoltaic power generation, the power loss due to being below 30% of rated parameter accounts for about 30% of the total annual power generation based on statistics. Therefore, if the over-configuration scheme in the present disclosure is not adopted, the capacity of the energy storage unit required to store the power loss due to being below the 30% of rated parameter is relatively large, which causes an increase in the cost of hydrogen production and a reduced engineering practicability.

In an embodiment, the rated parameter of the secondary hydrogen production system is set in a range of 5% to 50%, such as 5%, 15%, 25%, 35%, 45% or 50%, of the rated parameter of the primary hydrogen production system. The list numerals are not limiting, and any other numeral within the range is also applicable.

In an embodiment, the method includes: acquiring an operating parameter for a hot standby condition, acquiring an operating parameter of the secondary hydrogen production system as a first threshold, acquiring an operating parameter of the primary hydrogen production system as a second threshold, and acquiring a sum of a rated parameter of the secondary hydrogen production system and a rated parameter of the primary hydrogen production system, as a third threshold; monitoring, by the controller, an output electrical performance parameter of the renewable-energy-based power generation system in real time; controlling the secondary hydrogen production system, the primary hydrogen production system, and the energy storage unit or grid to be turned on/off based a relationship among the output electrical performance parameter, the operating parameter for the hot standby condition, the first threshold, the second threshold, the rated parameter of the primary hydrogen production system, and the third threshold. The method specifically includes situations S1 to S7 as follows.

In S1, the output electrical performance parameter is less than or equal to an operating parameter for the hot standby condition. In this situation, by using the controller, the bi-directional electrical converter is controlled to be turned on, and the primary electrical converter and the secondary electrical converter are both controlled to be turned off, so that the secondary hydrogen production system and the primary hydrogen production system are controlled to be turned off, and the energy storage unit or grid is controlled to discharge, aiming to achieve and maintain a condition where the output electrical performance parameter is greater than or equal to the operating parameter for the hot standby condition.

In S2, the output electrical performance parameter is greater than the operating parameter for the hot standby condition, and is less than or equal to the first threshold. In this situation, by using the controller, the bi-directional electrical converter is controlled to be turned on, and the primary electrical converter and the secondary electrical converter are both controlled to be turned off, so that the energy storage unit or grid is controlled to be charged, and the secondary hydrogen production system and the primary hydrogen production system are controlled to be turned off.

In S3, the output electrical performance parameter is greater than the first threshold and is less than or equal to a second threshold. In this situation, by using the controller, the secondary electrical converter is controlled to be turned on, and the primary electrical converter and the bi-directional electrical converter are both controlled to be turned off, so that the secondary hydrogen production system is controlled to be turned on, the primary hydrogen production system is maintained to be turned off, and the energy storage unit or grid is controlled to be turned off.

In S4, the output electrical performance parameter is greater than the second threshold and is less than or equal to a sum of the first threshold and the second threshold. In this situation, by using the controller, the primary electrical converter is controlled to be turned on, and the bi-directional electrical converter and the secondary electrical converter are both controlled to be turned off, so that the secondary hydrogen production system is controlled to be turned off, the primary hydrogen production system is maintained to be turned on, and the energy storage unit or grid is controlled to be turned off.

In S5, the output electrical performance parameter is greater than the sum of the first threshold and the second threshold, and is less than or equal to the rated parameter of the primary hydrogen production system. In this situation, by using the controller, the primary electrical converter is controlled to be turned on, and the secondary electrical converter and the bi-directional electrical converter are both controlled to be turned off, so that the secondary hydrogen production system is controlled to be turned off, the primary hydrogen production system is maintained to be turned on, and the energy storage unit or grid is controlled to be turned off.

Alternatively, by using the controller, the primary electrical converter and the secondary electrical converter are both controlled to be turned on, and the bi-directional electrical converter is controlled to be turned off, so that the secondary hydrogen production system and the primary hydrogen production system are both controlled to be turned on, and the energy storage unit or grid is controlled to be turned off.

In S6, the output electrical performance parameter is greater than the rated parameter of the primary hydrogen production system, and is less than or equal to the third threshold. In this situation, by using the controller, the primary electrical converter and the secondary electrical converter are both controlled to be turned on, and the bi-directional electrical converter is controlled to be turned off, so that the secondary hydrogen production system and the primary hydrogen production system are both controlled to be turned on, and the energy storage unit or grid is controlled to be turned off.

In S7, the output electrical performance parameter is greater than the third threshold. In this situation, by using the controller, the primary electrical converter, the secondary electrical converter, and the bi-directional electrical converter are all controlled to be turned on, so that the secondary hydrogen production system and the primary hydrogen production system are both controlled to be turned on, and the energy storage unit or grid is controlled to be charged.

It should be noted that the output electrical performance parameter, the operating parameter, and the rated parameter in the present disclosure all refer to power. For example, the operating parameter of the secondary hydrogen production system (the first threshold) refers to a minimum power required for an operation of the secondary hydrogen production system and start of hydrogen production, and the output electrical performance parameter of the renewable-energy-based power generation system refers to a power of the renewable-energy-based power generation system at the front of the hydrogen production power supply.

The system for producing hydrogen from renewable energy includes a renewable-energy-based power generation system, a primary hydrogen production system, a secondary hydrogen production system, and a controller. An output end of the renewable-energy-based power generation system is connected to the primary hydrogen production system and the secondary hydrogen production system via an electrical conversion device. A capacity of the primary hydrogen production system is greater than or equal to a capacity of the secondary hydrogen production system. The controller is configured to monitor an output electrical performance parameter of the renewable-energy-based power generation system in real time, and control turn on and turn off of the primary hydrogen production system and the secondary hydrogen production system. In this way, a power utilization range of renewable energy is improved, a power generated from renewable energy is used for hydrogen production to a maximum extend, a cost of hydrogen production from renewable energy is reduced, and an engineering practicability is improved.

### BRIEF DESCRIPTION OF THE DRAWINGS

Figure 1 is a diagram showing a power curve corresponding to an equalized configuration scheme in which a power generation capacity of a renewable-energy-based power generation system is configured equivalent to a rated parameter of a primary hydrogen production system;
Figure 2 is a schematic diagram of a system for producing hydrogen from renewable energy according to a first embodiment of the present disclosure;
Figure 3 is a diagram showing a power curve corresponding to a scheme in which a power generation capacity of a renewable-energy-based power generation system is configured equal to 1.5 times of a rated parameter of electrolytic cells of a primary hydrogen production system;
Figure 4 is a schematic diagram of a system for producing hydrogen from renewable energy according to a second embodiment of the present disclosure;
Figure 5 is a schematic diagram of a system for producing hydrogen from renewable energy according to a third embodiment of the present disclosure;
Figure 6 is a schematic diagram of a system for producing hydrogen from renewable energy according to a fourth embodiment of the present disclosure; and
Figure 7 is a schematic flowchart of a method for controlling a system for producing hydrogen from renewable energy according to an embodiment of the present disclosure.

Reference numerals in the drawings are listed and explained as follows.
1: Renewable-energy-based power generation system;
2: DC bus;
3: Primary hydrogen production system;
4: Secondary hydrogen production system;
5: Energy storage unit;
6: Controller;
7: AC powered device within the hydrogen production system;
8: Primary electrical converter;
9: Secondary electrical converter;
10: bi-directional electrical converter;
11: Electrical inverter;
12: Hydrogen separation and purification system;
13: DC/AC electrical converter; and
14: Grid.

### DETAILED DESCRIPTION

Hereinafter, technical solutions of the present application are illustrated in detail through embodiments and in conjunction with drawings.

In order to better illustrate the present disclosure and facilitate understanding of the technical solutions of the present disclosure, typical but non-limiting embodiments of the present disclosure are described as follows.

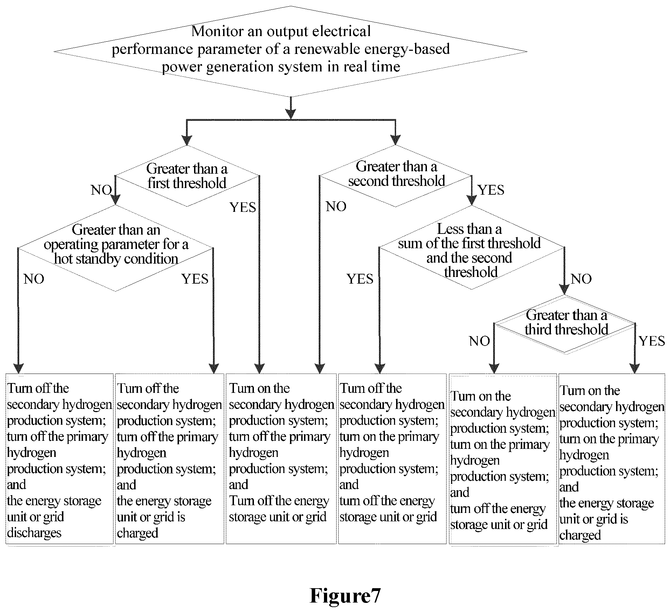

Figure 7 is a schematic flowchart of a method for controlling a system for producing hydrogen from renewable energy according to an embodiment of the present disclosure. As shown in Figure 7, the method includes situations T1 to T6 as follows.

In T1, an output electrical performance parameter is less than or equal to an operating parameter for a hot standby condition. In this situation, by using the controller, the bi-directional electrical converter is controlled to be turned on, and the primary electrical converter and the secondary electrical converter are both controlled to be turned off, so that the energy storage unit or grid is controlled to discharge, aiming to achieve and maintain a condition where the output electrical performance parameter is greater than or equal to the operating parameter for a hot standby condition, and the secondary hydrogen production system and the primary hydrogen production system are controlled to be turned off.

In T2, the output electrical performance parameter is greater than the operating parameter for a hot standby condition, and is less than or equal to a first threshold. In this situation, by using the controller, the bi-directional electrical converter is controlled to be turned on, and the primary electrical converter and the secondary electrical converter are both controlled to be turned off, so that the energy storage unit or grid is controlled to be charged, and the secondary hydrogen production system and the primary hydrogen production system are controlled to be turned off.

In T3, the output electrical performance parameter is greater than the first threshold and is less than or equal to a second threshold. In this situation, by using the controller, the secondary electrical converter is controlled to be turned on, and the primary electrical converter and the bi-directional electrical converter are both controlled to be turned off, so that the secondary hydrogen production system is controlled to be turned on, the primary hydrogen production system is maintained to be turned off, and the energy storage unit or grid is controlled to be turned off.

In T4, the output electrical performance parameter is greater than the second threshold and is less than or equal to a sum of the first threshold and the second threshold. In this situation, by using the controller, the primary electrical converter is controlled to be turned on, and the bi-directional electrical converter and the secondary electrical converter are both controlled to be turned off, so that the secondary hydrogen production system is controlled to be turned off, the primary hydrogen production system is maintained to be turned on, and the energy storage unit or grid is controlled to be turned off.

In T5, the output electrical performance parameter is greater than the sum of the first threshold and the second threshold, and is less than or equal to a third threshold. In this situation, by using the controller, the primary electrical converter and the secondary electrical converter are both controlled to be turned on, and the bi-directional electrical converter is controlled to be turned off, so that the secondary hydrogen production system and the primary hydrogen production system are both controlled to be turned on, and the energy storage unit or grid is controlled to be turned off.

In T6, the output electrical performance parameter is greater than the third threshold. In this situation, by using the controller, the primary electrical converter, the secondary electrical converter, and the bi-directional electrical converter are all controlled to be turned on, so that the secondary hydrogen production system and the primary hydrogen production system are both controlled to be turned on, and the energy storage unit or grid is controlled to be charged.

### First Embodiment

A system for producing hydrogen from renewable energy and a method for controlling the system are provided according to this embodiment. As shown in Figure 2, the system for producing hydrogen from renewable energy includes a renewable-energy-based power generation system 1, a DC bus 2, a primary hydrogen production system 3, a secondary hydrogen production system 4, an energy storage unit 5, a controller 6, an AC powered device 7 within the hydrogen production system, and an electrical converter. The electrical converter includes a primary electrical converter 8, a secondary electrical converter 9, a bi-directional electrical converter 10, and an electrical inverter 11. The renewable-energy-based power generation system 1 is a photovoltaic array. The primary hydrogen production system 3 includes one primary electrolytic cell for hydrogen production. the secondary hydrogen production system 4 includes one secondary electrolytic cell for hydrogen production.

An output end of the renewable-energy-based power generation system 1 is connected to the DC bus 2. The DC bus 2 is connected to a power supply end of the primary hydrogen production system 3 via the primary electrical converter 8. The DC bus 2 is connected to a power supply end of the secondary hydrogen production system 4 via the secondary electrical converter 9. The DC bus 2 is connected to the energy storage unit 5 via the bi-directional electrical converter 10. The DC bus 2 is connected to the AC powered device 7 within the hydrogen production system via the electrical inverter 11.

A monitor end of the controller 6 is connected to the DC bus 2. A control end of the controller 6 is connected to the primary electrical converter 8, the secondary electrical converter 9, the bi-directional electrical converter 10, and the electrical inverter 11.

The system for producing hydrogen from renewable energy further includes a hydrogen separation and purification system 12, which is shared by the primary hydrogen production system 3 and the secondary hydrogen production system 4. The hydrogen separation and purification system 12 is placed in open air in a skid-mounted manner, and is configured to outlet or collect produced oxygen in situ, and collect produced hydrogen.

The method for controlling the system for producing hydrogen from renewable energy includes: acquiring an operating power for a hot standby condition, acquiring an operating power of the secondary hydrogen production system as a first threshold, acquiring an operating power of the primary hydrogen production system as a second threshold, and acquiring a sum of a rated power of the secondary hydrogen production system and a rated power of the primary hydrogen production system, as a third threshold; monitoring, by the controller, an output electrical power of the renewable-energy-based power generation system in real time; controlling the secondary hydrogen production system, the primary hydrogen production system, and the energy storage unit or grid to be turned on/off based a relationship among the output electrical power, the operating power for the hot standby condition, the first threshold, the second threshold, the rated power of the primary hydrogen production system, and the third threshold.

It is set that: the rated power of the primary hydrogen production system is 100%; a power generation capacity of the renewable-energy-based power generation system is 1.5 times (150%) of the rated power of the primary hydrogen production system; and the rated power of the secondary hydrogen production system is 30% of the rated power of the primary hydrogen production system (that is, the capacity of the primary hydrogen production system is greater than the capacity of the secondary hydrogen production system). It is further obtained that: the operating power for the hot standby condition is 1%, the first threshold is 10%, the second threshold is 30%, and the third threshold is 130%. The control method specifically includes the following situations T1 to T6.

In T1, the output electrical power is less than or equal to the operating power (1%) for the hot standby condition. In this situation, by using the controller, the bi-directional electrical converter is controlled to be turned on, and the primary electrical converter and the secondary electrical converter are both controlled to be turned off, so that the energy storage unit or grid is controlled to discharge, aiming to achieve and maintain a condition where the output electrical power is greater than or equal to the operating power for a hot standby condition, and the secondary hydrogen production system and the primary hydrogen production system are controlled to be turned off.

In T2, the output electrical power is greater than the operating power (1%) for the hot standby condition, and is less than or equal to the first threshold (10%). In this situation, by using the controller, the bi-directional electrical converter is controlled to be turned on, and the primary electrical converter and the secondary electrical converter are both controlled to be turned off, so that the energy storage unit or grid is controlled to be charged, and the secondary hydrogen production system and the primary hydrogen production system are controlled to be turned off.

In T3, the output electrical power is greater than the first threshold (10%) and is less than or equal to the second threshold (30%). In this situation, by using the controller, the secondary electrical converter is controlled to be turned on, and the primary electrical converter and the bi-directional electrical converter are both controlled to be turned off, so that the secondary hydrogen production system is controlled to be turned on, the primary hydrogen production system is maintained to be turned off, and the energy storage unit or grid is controlled to be turned off.

In T4, the output electrical power is greater than the second threshold (30%) and is less than or equal to a sum (40%) of the first threshold and the second threshold. In this situation, by using the controller, the primary electrical converter is controlled to be turned on, and the bi-directional electrical converter and the secondary electrical converter are both controlled to be turned off, so that the secondary hydrogen production system is controlled to be turned off, the primary hydrogen production system is maintained to be turned on, and the energy storage unit or grid is controlled to be turned off.

In T5, the output electrical power is greater than the sum (40%) of the first threshold and the second threshold, and is less than or equal to a third threshold (130%). In this situation, by using the controller, the primary electrical converter and the secondary electrical converter are both controlled to be turned on, and the bi-directional electrical converter is controlled to be turned off, so that the secondary hydrogen production system and the primary hydrogen production system are both controlled to be turned on, and the energy storage unit or grid is controlled to be turned off.

In T6, the output electrical power is greater than the third threshold (130%). In this situation, by using the controller, the primary electrical converter, the secondary electrical converter, and the bi-directional electrical converter are all controlled to be turned on, so that the secondary hydrogen production system and the primary hydrogen production system are both controlled to be turned on, and the energy storage unit or grid is controlled to be charged.

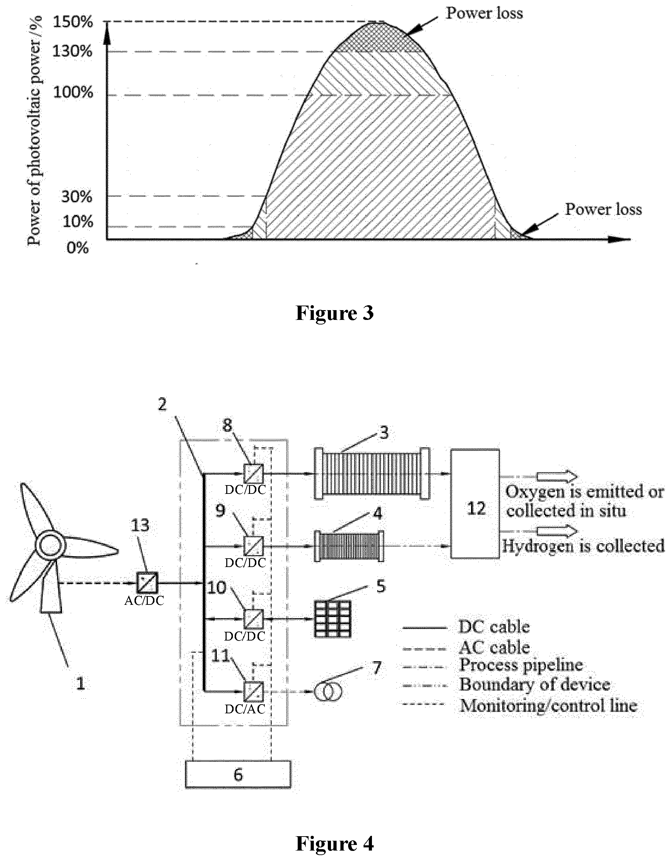

Based on the over-configuration scheme, the primary hydrogen production system, and the secondary hydrogen production system, a power curve of the photovoltaic array on one day with best power generation throughout a year is shown in Figure 3. As shown in Figure 3, a peak value is 150% (a maximum power corresponding to the DC bus), and a power loss of power generation by the photovoltaic array occurs only when the output electrical power is less than or equal to the first threshold (10%) or when the output electrical power is greater than the third threshold (130%). Based on statistics, among 365 days of the year, the power loss accounts for less than 5% of the total power generation in the year, and the power abandonment ratio is significantly reduced. In addition, power in such power loss is mainly stored by the energy storage unit, which not only allows the capacity of the energy storage unit to be reduced, but also further reduces the power loss, thereby reducing the cost of hydrogen production.

### Second Embodiment

A system for producing hydrogen from renewable energy and a method for controlling the system are provided according to this embodiment. As shown in Figure 4, the system and the control method are identical to those described in the first embodiment except that: a wind power generator is substituted with the photovoltaic array in the renewable-energy-based power generation system 1, and a AC/DC electrical converter 13 is provided between the wind power generator and the DC bus 2. An AC input end of the AC/DC electrical converter 13 is connected to an output end of the wind power generator, and a DC output end of the AC/DC electrical converter 13 is connected to the DC bus 2.

### Third Embodiment

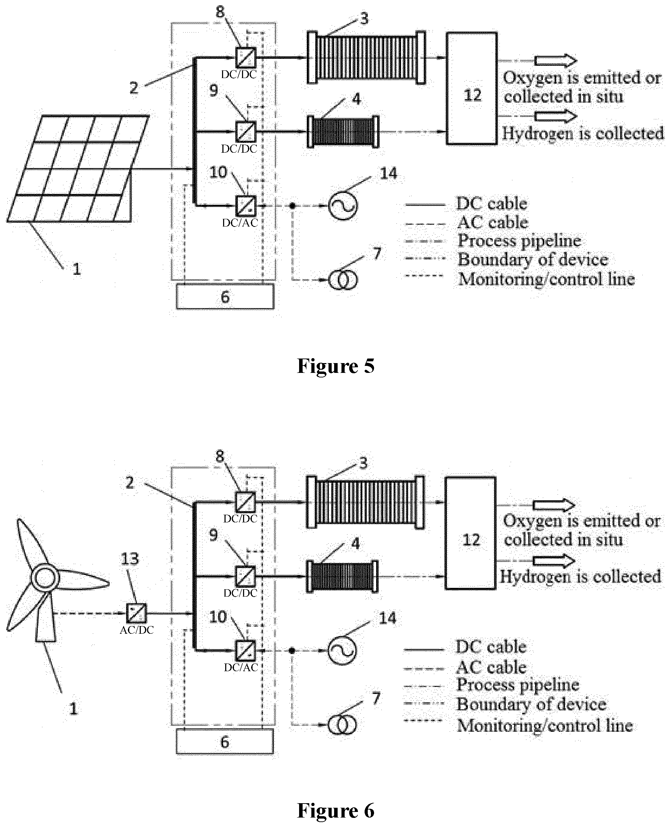

A system for producing hydrogen from renewable energy and a method for controlling the system are provided according to this embodiment. As shown in Figure 5, the system is identical to those described in the first embodiment except that: the energy storage unit 5 is substituted with a grid 14 which is configured to power the AC powered device within the hydrogen production system 7, and thus the electrical inverter 11 can be removed. In the method for controlling the system for producing hydrogen from renewable energy, the grid 14 is applied to maintain the condition where the output electrical power is greater than or equal to the operating power for the hot standby condition in a case where the output power meets situation T1; and the power generated in the renewable-energy-based power generation system 1 (photovoltaic array) that cannot be used for hydrogen production is incorporated into the grid 14 for use, in a case where the output electrical power meets situation T2 or T6. According to the present disclosure, there is a small amount of power in the hydrogen production system that cannot be used for hydrogen production. Therefore, the power to be incorporated into the grid 14 can be reduced, thereby reducing effect or dependency on the grid 14.

### Fourth Embodiment

A system for producing hydrogen from renewable energy and a method for controlling the system are provided according to this embodiment. As shown in Figure 6, the system is identical to those described in the third embodiment except that: the photovoltaic array is substituted with a wind power generator in the renewable-energy-based power generation system 1, and a AC/DC electrical converter 13 is provided between the wind power generator and the DC bus 2. An AC input end of the AC/DC electrical converter 13 is connected to an output end of the wind power generator, and a DC output end of the AC/DC electrical converter 13 is connected to the DC bus 2.

In summary, the system for producing hydrogen from renewable energy in the present disclosure includes a renewable-energy-based power generation system, a primary hydrogen production system, a secondary hydrogen production system, and a controller. An output end of the renewable-energy-based power generation system is connected to the primary hydrogen production system and the secondary hydrogen production system via an electrical conversion device. A capacity of the primary hydrogen production system is greater than or equal to a capacity of the secondary hydrogen production system. The controller is configured to monitor an output electrical performance parameter of the renewable-energy-based power generation system in real time, and control turn on and turn off of the primary hydrogen production system and the secondary hydrogen production system. In this way, a power utilization range of renewable energy is improved, a power generated from renewable energy is used for hydrogen production to a maximum extend, a cost of hydrogen production from renewable energy is reduced, and an engineering practicability is improved.

It is to be noted that, although detailed structural features of the present disclosure are illustrated through the above embodiments, the present disclosure is not limited to detailed structural features above, that is, the present disclosure is not intended to be implemented necessarily depending on the structural features. It shall be apparent to those skilled in the art that any modification of the present disclosure, an equivalent replacement of a component in the present disclosure, an addition of an auxiliary component, a selection of a specific manner, and the like, shall all fall within the protection scope of and disclosed scope of the specification.

Preferred embodiments of the present disclosure are described in detail above. However, the present disclosure is not limited to details in the above embodiments, and various simple variants of the technical solutions of the present disclosure may be made within the scope of the technical conception of the present disclosure, and these simple variants shall fall within the protection scope of the present disclosure.

It should be further noted that the specific technical features described in the embodiments may be combined in any suitable manner without causing contradiction. Various possible combinations are not illustrated in the present disclosure to avoid unnecessary repetition.

In addition, various embodiments of the present disclosure may be combined arbitrarily without violating the idea of the present disclosure, and the combinations shall be regarded as being disclosed in the present disclosure.

## Claims

1. A system for producing hydrogen from renewable energy, comprising a renewable-energy-based power generation system, a primary hydrogen production system, a secondary hydrogen production system, and a controller, wherein
an output end of the renewable-energy-based power generation system is connected to the primary hydrogen production system and the secondary hydrogen production system via an electrical conversion device;
a monitoring end of the controller is connected to the output end of the renewable-energy-based power generation system, and a control end of the controller is connected to the electrical conversion device; and
a capacity of the primary hydrogen production system is greater than or equal to a capacity of the secondary hydrogen production system.

2. The system for producing hydrogen from renewable energy according to claim 1, wherein the electrical conversion device comprises a primary electrical converter and a secondary electrical converter, wherein
the output end of the renewable-energy-based power generation system is connected to a direct current, DC, bus,
the DC bus is connected to a power supply end of the primary hydrogen production system via the primary electrical converter,
the DC bus is connected to a power supply end of the secondary hydrogen production system via the secondary electrical converter, and
the control end of the controller is connected to the primary electrical converter and the secondary electrical converter.

3. The system for producing hydrogen from renewable energy according to one of claims 1 or 2, wherein
the renewable-energy-based power generation system comprises a photovoltaic array or a wind power generator,
the primary hydrogen production system comprises one primary electrolytic cell for hydrogen production, and
the secondary hydrogen production system comprises one or more secondary electrolytic cells for hydrogen production.

4. The system for producing hydrogen from renewable energy according to one of the previous claims, further comprising an energy storage unit or grid, wherein
the energy storage unit or grid is connected to the DC bus via a bi-directional electrical converter included in the electrical conversion device, and
the control end of the controller is connected to the bi-directional electrical converter.

5. The system for producing hydrogen from renewable energy according to one of the previous claims, further comprising an alternating current, AC, powered device, wherein
the AC powered device is connected to the DC bus via an electrical inverter included in the electrical conversion device, and
the control terminal of the controller is connected to the electrical inverter.

6. The system for producing hydrogen from renewable energy according to one of the previous claims, further comprising a hydrogen separation and purification system shared by the primary hydrogen production system and the secondary hydrogen production system.

7. A method for controlling the system for producing hydrogen from renewable energy according to any one of claims 1 to 6, comprising:
acquiring an operating parameter of the secondary hydrogen production system as a first threshold;
acquiring an operating parameter of the primary hydrogen production system as a second threshold;
monitoring, by the controller, an output electrical performance parameter of the renewable-energy-based power generation system in real time;
controlling the secondary hydrogen production system to be turned on or turned off based on whether the output electrical performance parameter being greater than the first threshold; and
controlling the primary hydrogen production system to be turned on or turned off based on whether the output electrical performance parameter being greater than the second threshold,
wherein the first threshold value is less than the second threshold value.

8. The method according to claim 7, further comprising:
controlling the secondary hydrogen production system to be turned off and maintaining the primary hydrogen production system to be turned on, in a case where the output electrical performance parameter is greater than the second threshold and is less than a sum of the first threshold and the second threshold.

9. The method according to one of claims 7 or 8, further comprising:
controlling the secondary hydrogen production system to be turned off and maintaining the primary hydrogen production system to be turned on, or controlling the secondary hydrogen production system and the primary hydrogen production system both to be turned on, in a case where the output electrical performance parameter is greater than a sum of the first threshold and the second threshold, and is less than a rated parameter of the primary hydrogen production system.

10. The method according to one of claims 7 to 9, further comprising:
acquiring a sum of a rated parameter of the secondary hydrogen production system and a rated parameter of the primary hydrogen production system, as a third threshold; and
controlling the energy storage unit or grid to be turned on and charged based on whether the output electrical performance parameter being greater than the third threshold.

11. The method according to one of claims 7 to 10, further comprising:
controlling the energy storage unit or grid to be turned on and charged based on whether the output electrical performance parameter being less than the first threshold.

12. The method according to one of claims 7 to 11, further comprising:
controlling the energy storage unit or grid to be turned on and discharge based on whether the output electrical performance parameter being less than an operating parameter for a hot standby condition, wherein
the operating parameter for the hot standby condition is less than the first threshold.

13. The method according to any one of claims 7 to 12, wherein a power generation capacity of the renewable-energy-based power generation system is in a range of one to two times of the rated parameter of the primary hydrogen production system.
